# EUROPÄISCHE PATENTSCHRIFT

(11) **EP 0 624 511 B1**
(45) Veröffentlichungstag und Bekanntmachung des Hinweises auf die Patenterteilung: **14.08.1996**
(21) Anmeldenummer: 94105744.0
(22) Anmeldetag: 14.04.1994
(51) Int. Cl.: B62D 33/06

(54) **Anlenkung eines Kippzylinders am kippbaren Fahrerhaus eines Lastkraftwagens**
Pivoting link of a tilt cylinder with the tiltable cab of a lorry
Raccord pivotant d'un cylindre basculant avec la cabine du conducteur d'un camion

(30) Priorität: 14.05.1993 AT 952/93
(43) Veröffentlichungstag der Anmeldung: 17.11.1994
(73) Patentinhaber: STEYR NUTZFAHRZEUGE AG, A-4400 Steyr (AT)
(72) Erfinder: Burgholzer, Johann, A-4442 Kleinraming (AT); Wenzl, Kurt, Dipl.-Ing., A-4048 Puchenau (AT)

(56) Entgegenhaltungen:
- EP-A- 0 188 824
- EP-A- 0 429 757
- EP-A- 0 485 724

## Beschreibung

Die Erfindung betrifft eine Anlenkung eines Kippzylinders am kippbaren Fahrerhaus eines Lastkraftwagens, über einen fahrerhausfesten Querbolzen, der ein Langloch im endseitig der Kippzylinder-Kolbenstange gegebenen Lagerauge durchdringt, welches Langloch hinsichtlich seiner Länge so bestimmt ist, daß ein freies Aus- und Einfedern des Fahrerhauses während des Fahrbetriebes möglich ist. Eine derartige Anlenkung gemäß den Merkmalen des Oberbegriffes des Anspruchs 1 ist z.B. bekannt aus EP-A-0 429 757.

Der Erfindung liegt dabei folgende Problematik zugrunde: Der Gang des Querbolzens im Langloch des Kolbenstangen-Lagerauges muß sowohl in seiner Breite als auch in seiner Länge spielbehaftet sein, um das Aus- und Einfedern des Fahrerhauses während des Fahrbetriebes nicht zu behindern. Dadurch ist bei den dynamischen Federbewegungen des Fahrerhauses ein metallisches Anschlagen der diesbezüglichen Verbindungsorgane kaum vermeidbar.

Der Erfindung stellt sich daher die Aufgabe, eine Anlenkung der eingangs genannten Art so auszugestalten, daß ein Entstehen und Weiterleiten von Geräuschen während des Fahrbetriebes vermeidbar ist.

Diese Aufgabe ist bei einer Anlenkung der gattungsgemäßen Art erfindungsgemäß entsprechend dem Kennzeichen des Anspruches 1 dadurch gelöst, daß im Lagerauge der Kolbenstange parallel zum Langloch verlaufende, aber demgegenüber eine größere Grundfläche aufweisende Längsnuten mit kegligen Rändern gegeben sind, in die auf dem Querbolzen drehbar gelagerte Kegelrollen aus elastischem Material mit gewissem Spiel eintauchen, welche als körperschallisolierende Verbindungselemente zwischen Fahrerhaus und Kippzylinder-Kolben dienen, dessen Lagerauge zentrieren und bei dynamischen Fahrerhaus-Bewegungen in den Längsnuten des Kolbenstangen-Lagerauges abrollen.

Durch eine derartige kegelrollengestützte Anlenkung der Kippzylinder-Kolbenstange am Fahrerhaus ist ein Entstehen und Weiterleiten von Geräuschen während des Fahrbetriebes auch bei starken dynamischen Schwingungen des Fahrerhauses vermeidbar. Außerdem ermöglicht diese kegelrollengestützte Anlenkung eine weitgehend kräftefreie, reibungsarme Verbindung während jedes Ein- oder Ausfederungszustandes des Fahrerhauses zwischen diesem und dem Rahmen und beeinträchtigt in keinster Weise den Komfort der Fahrerhauslagerung. Darüber hinaus wird das Durchfallen des Fahrerhauses während des Kippens nach vorne oder zurück beim Überschreiten des Totpunktes im Kippzylinder vollelastisch abgefangen.

Nachstehend ist eine Ausführungsform der erfindungsgemäßen Anlenkung anhand der Zeichnung noch näher erläutert. In der Zeichnung zeigen:

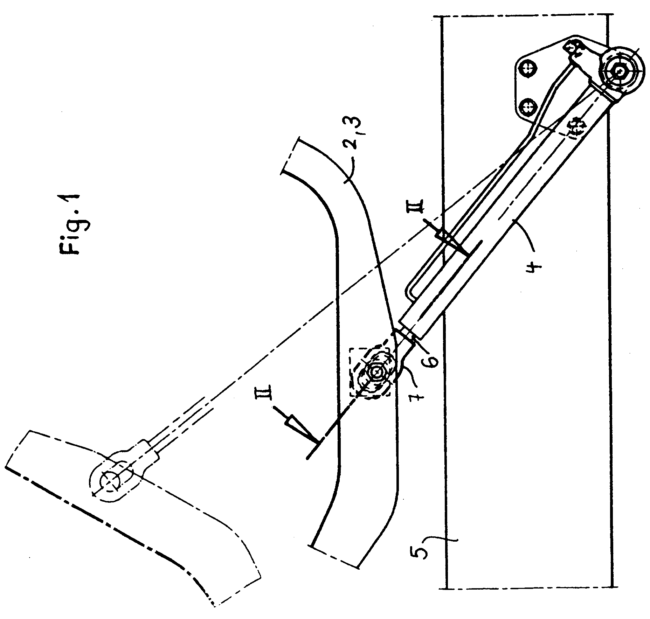

- Fig. 1: in Seitenansicht eine Anlenkung erfindungsgemäßer Bauart mit ungekippt (ausgezogen) und gekippt dargestelltem Fahrerhaus, wobei repräsentativ für dieses nur einer von dessen beiden bodenseitigen Längsträgern gezeigt ist,

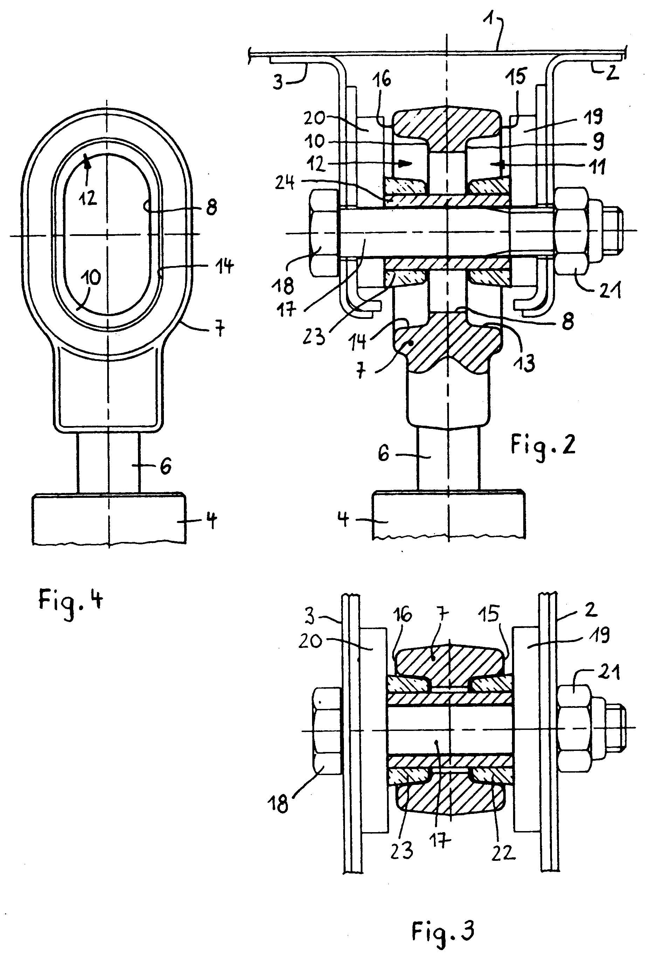

- Fig. 2: einen Längsschnitt durch die erfindungsgemäße Anlenkung entlang der in Fig. 1 eingezeichneten Schnittlinie II - II,
- Fig. 3: einen Querschnitt durch die erfindungsgemäße Anlenkung, und
- Fig. 4: das obere Ende des Fahrerhaus-Kippzylinders in Seitenansicht.

In der Zeichnung sind mit 1 der Boden und mit 2,3 die an letzterem unten abragend befestigten Längsträger eines desweiteren nicht dargestellten kippbaren Fahrerhauses eines Lastkraftwagens bezeichnet. Als Teil der Kippvorrichtung für das Fahrerhaus ist in der Zeichnung ein Kippzylinder mit 4 bezeichnet, der an seinem unteren Ende in nicht näher erläuterter Weise drehbar am Fahrgestellrahmen 5 des Lastkraftwagens angelenkt ist. In diesem Kippzylinder 4 ist zum Kippen des Fahrerhauses hydraulisch eine Kolbenstange 6 axial verschiebbar, die mit ihrem am äußeren freien oberen Ende gegebenen Lagerauge 7 in erfindungsgemäßer Art gestaltet und am Fahrerhaus angelenkt ist. Im Lagerauge 7 der Kolbenstange 6 sind ein parallel zu dessen Längsachse verlaufendes Langloch 8 und zwei parallel zu diesem verlaufende, aber demgegenüber eine größere Grundfläche 9, 10 aufweisende Längsnuten 11, 12 mit kegligen Rändern 13, 14 gegeben. Diese Längsnuten 11, 12 sind vorzugsweise gleich ausgebildet und von den beiden zur Kolbenstangenachse planparallelen Seitenflächen 15, 16 des Lagerauges 7 her jeweils entsprechend eingeformt bzw. eingearbeitet. Zur Verbindung der Kolbenstange 6 mit dem Fahrerhaus dient ein fahrerhausfester Querbolzen 17, der im dargestellten Ausführungsbeispiel durch den Schaft einer Schraube 18 gebildet ist, welche Bohrungen in beiden Seitenwangen 19, 20 der fahrerhausseitigen Längsträger 2, 3 sowie das Langloch im Lagerauge 7 der Kolbenstange 6 quer durchdringt und andernendes des Schraubenkopfes mittels einer Mutter 21 festgespannt ist.

Auf dem Querbolzen 17 sind generell zwei Kegelrollen 22, 23 aus elastischem Material drehbar gelagert, von denen jede in eine der beiden Längsnuten 11, 12 des Kolbenstangen-Lagerauges 7 eintaucht. Diese Kegelrollen 22, 23 dienen als körperschallisolierende Verbindungselemente zwischen Fahrerhaus und Kippzylinder-Kolben 6, zentrieren dessen Lagerauge 7 in Querrichtung und rollen bei dynamischen Fahrerhaus-Bewegungen in den Längsnuten 11, 12 ab. Als Lagerorgan für die Kegelrollen 22, 23 dient im dargestellten Ausführungsbeispiel eine Lagerhülse 24, die auf dem Schaft 17 der Schraube 18 sitzt und über die Mutter 21 zwischen den beiden Seitenwangen 19, 20 der beiden Längsträger 2, 3 verdrehungssicher festgespannt ist. Diese Lagerhülse 24 durchdringt ebenfalls das Langloch 8 des Kolbenstangen-Lagerauges 7 und hat einen Durchmesser, der gegenüber der Breite des Langloches 8 etwas kleiner ist. Auf dieser Lagerhülse 24 sind drehbar die mit geringem Axialspiel zwischen den Längsträger-Seitenwangen 19, 20 und den Längsnuten-Böden 9, 10 fixierten Kegelrollen 22, 23 gelagert. Die beiden Längsnuten 11, 12 haben jeweils parallele Seitenabschnitte und halbkreisförmige Endabschnitte und zwischen diesen eine solche Länge, außerdem hat die Lagerhülse 24 einen solchen Durchmesser im Bezug auf das Langloch 8 im Kolbenstangen-Lagerauge 7, daß während des Fahrbetriebes auch bei stärksten dynamischen Fahrerhaus-Bewegungen ein Anschlagen von Metall auf Metall vermeidbar ist. Die Kegelrollen 22, 23 selbst bestehen aus einem eine begrenzte elastische Verformung zulassenden Material wie Polyurethan oder Hartgummi. Während des Fahrbetriebes des Lastkraftwagens rollen die Kegelrollen 22, 23 an der einen oder anderen Seitenfläche 13, 14 der Längsnut 11, 12 anliegend ab. Dadurch ist eine reibungsarme und fast kräftefreie Verbindung zwischen Fahrerhaus und Kippzylinder 4 gewährleistet. Durch die doppelkegelförmige Ausbildung der Anlenkung ist automatisch eine Zentrierung des kolbenstangenseitigen Lagerauges erzielbar. Eine Berührung der Lagerhülse 24 mit dem Lagerauge 6 ist während des Fahrbetriebes ausgeschlossen, so daß diesbezüglich kein störendes Geräusch entstehen kann. Die Vorgänge beim Kippen des Fahrerhauses stellen sich mit der erfindungsgemäßen Anlenkung wie folgt dar: Nach hydraulischer Betätigung der Kolbenstange 6 über den Kippzylinder 4 werden die beiden Kegelrollen 22, 23 - nach Überbrücken des Freiweges in den beiden Längsnuten 11, 12 und einem Anschlagen an deren unteren Enden - zunächst leicht zusammengedrückt, aber nur soweit, bis die Lagerhülse 24 am unteren Ende des Langloches 8 im Kolbenstangen-Lagerauge 7 zur Anlage kommt. Danach werden die Kippkräfte unmittelbar über die Kolbenstange 6 und die solchermaßen aneinander abgestützten Anlenkungsteile übertragen. Eine zu starke Belastung der elastisch nachgiebigen Kegelrollen 22, 23 ist dabei ausgeschlossen. Nach Überschreiten des Totpunktes beim Kippen bewegt sich beim Nach-vorn-fallen des Fahrerhauses 1, 2, 3 die Lagerhülse 24 mit den Kegelrollen 22, 23 in Richtung des oberen Endes des Langloches 8, wobei das dortige Anschlagen dadurch gemildert wird, daß die Lagerhülse 24 erst nach dem Zusammendrücken der elastischen Kegelrollen 22, 23 am oberen Ende der Längsnut 8 zur Anlage kommt. Somit ist aufgrund der kegelrollengestützten Anlenkung auch eine Beschädigung der Lagerhülse 24 bzw. des sie tragenden Querbolzens 17 wirksam verhinderbar.

## Patentansprüche

1. Anlenkung eines Kippzylinders am kippbaren Fahrerhaus eines Lastkraftwagens, über einen fahrerhausfesten Querbolzen, der ein Langloch im endseitig der Kippzylinder-Kolbenstange gegebenen Lagerauge durchdringt, welches Langloch hinsichtlich seiner Länge so bestimmt ist, daß ein freies Aus-und Einfedern des Fahrerhauses während des Fahrbetriebes möglich ist, dadurch gekennzeichnet, daß im Lagerauge (7) der Kippzylinder-Kolbenstange (6) parallel zum Langloch (8) verlaufende, aber demgegenüber eine größere Grundfläche (9, 10) aufweisende Längsnuten (11, 12) mit kegligen Rändern (13, 14) gegeben sind, in die auf dem Querbolzen (17) drehbar gelagerte Kegelrollen (22, 23) aus elastischem Material mit gewissem Spiel eintauchen, welche als körperschallisolierende Verbindungselemente zwischen Fahrerhaus und Kippzylinder-Kolben (6) dienen, dessen Lagerauge (7) zentrieren und bei dynamischen Fahrerhaus-Bewegungen in den Längsnuten (11, 12) abrollen.

2. Anlenkung nach Anspruch 1, dadurch gekennzeichnet, daß der Querbolzen (17) durch den Schaft einer Schraube (18) zur Festspannung einer Lagerhülse (24) zwischen den beiden Seitenwangen (19, 20) zweier fahrerhausfester Längsträger (2, 3) gebildet ist, welche Lagerhülse (24) einen Durchmesser mit gegenüber der Breite des Langloches (8) im Kolbenstangen-Lagerauge (7) etwas kleineren Maß bat und als Lagerorgan für die darauf drehbaren und mit geringem Axialspiel zwischen den Längsträger-Seitenwangen (19, 20) und den Längsnuten-Grundflächen (9, 10) fixierten Kegelrollen (22, 23) dient.

3. Anlenkung nach einem der vorhergehenden Ansprüche, dadurch gekennzeichnet, daß die Längsnuten (11, 12) eine solche Länge und das metallische Kegelrollen-Trag-/Lagerorgan (24) einen solchen Durchmesser in Bezug auf das Langloch (8) im Kolbenstangen-Lagerauge (7) haben, daß während des Fahrbetriebes auch bei stärksten dynamischen Fahrerhaus-Bewegungen ein Anschlagen von Metall auf Metall vermeidbar ist.

4. Anlenkung nach Anspruch 1, dadurch gekennzeichnet, daß die Kegelrollen (22, 23) aus einem eine begrenzte elastische Verformung zulassenden Material wie Polyurethan oder Hartgummi bestehen.

## Claims

1. Location device of a tilt cylinder on a tilting cab of a truck via a cross pin that is firmly attached to the cab and penetrates a slot in the mount eye located at the end of the piston rod of the tilt cylinder, which slot, in respect of its length, is designed so as to allow the cab unimpeded spring compression and rebound while the vehicle is in motion, characterised in that in the mount eye (7) of the piston rod (6) of the tilt cylinder longitudinal grooves (11, 12) are provided which run parallel to the slot (8) but have a larger base area (9, 10) than said slot (8) and have tapered edges (13, 14), into which reach, with a certain play, tapered rollers (22, 23) that are swivel-mounted on the cross pin (17), are made of elastic material, serve as structure-borne-noise-insulated connection elements between cab and tilt-cylinder piston (6), centre the mount eye (7) of said tilt-cylinder piston (6) and roll in the longitudinal grooves (11, 12) in the event of dynamic cab movement.

2. Location device according to Claim 1, characterised in that the cross pin (17) is formed by the shank of a bolt (18) for tensioning a bearing sleeve (24) between the two side walls (19, 20) of two longitudinal members (2, 3) firmly attached to the cab, which bearing sleeve (24) has a diameter somewhat smaller than the width of the slot (8) in the mount eye (7) of the piston rod and serves as a support organ for the tapered rollers (22, 23) that are swivel-mounted on said support organ and have with slight axial play between the side walls (19, 20) of the longitudinal members and the base areas (9, 10) of the longitudinal grooves.

3. Location device according to one of the aforementioned Claims, characterised in that in respect of the slot (8) in the mount eye (7) of the piston rod, the length of the longitudinal grooves (11, 12) and the diameter of the metallic tapered roller-support organ (24) are such that a metal-to-metal contact can be prevented even in the event of the most vigorous dynamic cab movement while the vehicle is in motion.

4. Location device according to Claim 1, characterised in that the tapered rollers (22, 23) are made of a material such as polyurethane or hard rubber that allows limited elastic deformation.

## Revendications

1. Moyen d'articulation d'un vérin de basculement sur une cabine basculante de camion par l'intermédiaire d'un goujon transversal solidaire de la cabine qui traverse un trou oblong d'un oeillet de palier à une extrémité de la tige de piston du vérin de basculement, la longueur de ce trou oblong étant choisie pour permettre un mouvement de suspension en compression et extension libre de la cabine pendant la circulation du véhicule, caractérisé en ce que dans l'oeillet de palier (7) de la tige de piston (6) du vérin de basculement, parallèlement au trou oblong (8), il y a des rainures longitudinales (11, 12) ayant une surface de base (9, 10) plus grande, et des bords coniques (13, 14) recevant des galets coniques (22, 23) montés à rotation sur le goujon transversal (17) en matière élastique avec un certain jeu, ces galets constituant des éléments de liaison assurant l'isolation phonique entre la cabine et le piston (6) du vérin de basculement, le centrage de l'oeillet de palier (7) et qui sous l'effet des mouvements dynamiques de la cabine roulent dans les rainures longitudinales (11, 12).

2. Moyen d'articulation selon la revendication 1, caractérisé en ce que le mouvement transversal (17) est formé par le corps d'une vis (18) assurant le serrage d'une douille de palier (24) entre les deux joues latérales (19, 20) de deux longerons (2, 3) solidaires de la cabine, cette douille de palier (24) ayant un diamètre légèrement plus petit par rapport à la largeur du trou oblong (8) de l'oeillet (7) du palier de la tige de piston, et servant d'organe de palier pour les galets coniques (22, 23), montés à rotation dans cette douille et se logeant avec un faible jeu axial entre les joues latérales (19, 20) des longerons et les surfaces de base (9, 10) des rainures longitudinales.

3. Moyen d'articulation selon l'une des revendications précédentes, caractérisé en ce que les rainures longitudinales (11, 12) ont une longueur telle et l'organe de palier/support de galet de rotation, métallique (24) a un diamètre tel par rapport au trou oblong (8) de l'oeillet de palier (7) des tiges de piston que pendant la circulation du véhicule, même sous l'effet des mouvements dynamiques les plus intenses de la cabine, on évite les chocs métal contre métal.

4. Moyen d'articulation selon la revendication 1, caractérisé en ce que les galets coniques (22, 23) sont réalisés en une matière telle que du polyuréthane ou un caoutchouc dur permettant une déformation élastique limitée.
